# EUROPEAN PATENT SPECIFICATION

(11) **EP 1 675 904 B1**
(45) Date of publication and mention of the grant of the patent: **06.04.2011**
(21) Application number: 04796168.5
(22) Date of filing: 22.10.2004
(51) Int. Cl.: C08L 23/00

(54) **COMPOSITION IN COMBINATION WITH AN EXTRUSION BLOW MOLDED THERMOPLASTIC PACKAGE**
ZUSAMMENSETZUNG IN KOMBINATION MIT EINER EXTRUSIONSBLASGEFORMTEN THERMOPLASTISCHEN PACKUNG
COMPOSITION COMBINEE A UN EMBALLAGE THERMOPLASTIQUE MOULE PAR EXTRUSION-SOUFFLAGE

(30) Priority: 22.10.2003 US 513502 P
(43) Date of publication of application: 05.07.2006
(73) Proprietor: THE PROCTER & GAMBLE COMPANY, Cincinnati, OH 45202 (US)
(72) Inventor: KERR, George, Scott, Mason, OH 45040 (US)
(74) Representative: Fiesser, Gerold Michael
(86) International application number: PCT/US2004/035120
(87) International publication number: WO 2005/042633

(56) References cited:
- EP-A- 0 292 007
- EP-A- 1 153 948
- WO-A-02/074854
- DE-U1- 29 609 414
- DE-U1- 29 609 414
- US-A- 6 165 576

## Description

### FIELD OF THE INVENTION

This invention relates to a packaged product comprising the combination of a composition with a packaging system containing the composition wherein the packaging system is formed from an extrusion blow molded thermoplastic package.

### BACKGROUND OF THE INVENTION

The use of extrusion blow molded thermoplastic containers is well known and many attempts have been made to provide improved containers at a more efficient cost.

Typically, thermoplastic tube packages have consumer preferred dispensing properties for shear thinning liquid(s) - beauty care products such as shampoos, conditioners, treatments, lotions, creams, etc. Tubes used in combination with shear thinning liquids are preferred to conventional extrusion blow molded packages due to their superior flexibility, squeezability, feel in the hand which results in better product dispensing control by the consumer. However, due to slower manufacturing speeds, extrusion molded tubes are more expensive to manufacture and to fill / package then conventional extrusion blow molded packages.

Despite the options available, consumers still desire packages which provide superior flexibility and squeezability, as well as feel in the hand which results in better product dispensing control by the consumer.

### SUMMARY OF THE INVENTION

It has now been surprisingly found that an extrusion blow molded thermoplastic package may be produced having product consumer preferred dispensing properties similar to a tube package when used in combination with a composition. At the same time, lower costs / higher speed manufacturing and production speeds typically associated with conventional extrusion blow molded thermoplastic containers may be maintained. In addition to "tube like" dispensing properties and feel, the present invention has consumer preferred ergonomic and aesthetic shape(s) versus conventional tube packages.

This invention results in a shear thinning liquid(s) and extrusion blow-molded thermoplastic package combination having superior dispensing properties versus conventional extrusion blow molded packages.

The present invention is directed to a packaged product comprising the combination of a composition with a packaging system comprising the composition, wherein the packaging system comprises an extrusion blow molded thermoplastic package comprising a combination of a high density polyethylene and a low density polyethylene thermoplastic resin in a ratio of from about 80% high density polyethylene thermoplastic resin / about 20% low density polyethylene thermoplastic resin to about 20% high density polyethylene thermoplastic resin / 80% low density polyethylene thermoplastic resin, wherein the packaged product is soft, squeezable, and flexible, and having the ability to recover to its original size/shape after usage.

### BRIEF DESCRIPTION OF THE DRAWINGS

While the specification concludes with claims which particularly point out and distinctly claim the present invention, it is believed that the present invention will be better understood from the following description of preferred embodiments, taken in conjunction with the accompanying drawings, in which like reference numerals identify like elements and wherein:
Figure 1 is a top view of a packaged product according to the present invention.
Figure 2 is a perspective view of a packaged product according to the present invention.
Figure 3 is a front perspective view of a packaged product according to the present invention, the back perspective view being the same.
Figure 4 is a side view of a packaged product according to the present invention, the opposite side view being the same.
Figure 5 is bottom view of a packaged product according to the present invention.
Figure 6 is a top view of an alternative embodiment of the present invention comprising a packaged product.
Figure 7 is a perspective view of an embodiment of the present invention comprising a packaged product.
Figure 8 is a front view of an embodiment of the present invention comprising a packaged product, the back perspective view being the same.
Figure 9 is a side view of an embodiment of the present invention comprising a packaged product, the opposite side view being the same.
Figure 10 is a bottom view of an embodiment of the present invention comprising a packaged product.
Figure 11 is a top view of an alternative embodiment of the present invention comprising a packaged product.
Figure 12 is a perspective view of an embodiment of the present invention comprising a packaged product.
Figure 13 is a front view of an embodiment of the present invention comprising a packaged product, the back perspective view being the same.
Figure 14 is a side view of an embodiment of the present invention comprising a packaged product, the opposite side view being the same.
Figure 15 is a bottom view of an embodiment of the present invention comprising a packaged product.
Figure 16 is a stress/strain curve representative for a typical semi-crystalline thermoplastic polymer.
Figure 17 is a stress/strain curve representative for the present invention.
Figure 18 is a table demonstrating the lbf/in² measure to squeeze a typical HDPE material versus the present invention.
Figure 19 is a thickness profile of the present invention demonstrating the shape of thickness bands.
Figure 20 is a stress distribution under load profile of the present invention.
Figure 21 is a load versus displacement profile of the present invention.

### DETAILED DESCRIPTION OF THE INVENTION

All documents cited are, in relevant part, incorporated herein by reference; the citation of any document is not to be construed as an admission that it is prior art with respect to the present invention.

All ratios are weight ratios unless specifically stated otherwise.

Except as otherwise noted, all amounts including quantities, percentages, portions, and proportions, are understood to be modified by the word "about", and amounts are not intended to indicate significant digits.

Except as otherwise noted, the articles "a", "an", and "the" mean "one or more".
The present invention can comprise, consist of, or consist essentially of the essential elements and limitations of the invention described herein, as well any of the additional or optional ingredients, components, or limitations described herein.

All percentages, parts and ratios are based upon the total weight of the compositions of the present invention, unless otherwise specified. All such weights as they pertain to listed ingredients are based on the active level and, therefore, do not include carriers or by-products that may be included in commercially available materials. Herein, "molecular weight" means weight average molecular weight, unless specifically stated otherwise.

The components, including those, which may optionally be added, of the methods of the present invention, as well as methods for preparation, and methods for use, are described in detail below.

Other advantages and novel features of the present invention will become apparent to those skilled in the art from the following detailed description, which simply illustrates various modes contemplated for carrying out the invention. As will be realized, the invention is capable of other different aspects, all without departing from the spirit and scope of the invention. Accordingly, the drawings and descriptions are illustrative in nature and not restrictive.

Reference will now be made in detail to various exemplary embodiments of the invention, several of which are also illustrated in the accompanying drawings, wherein like numerals indicate the same elements throughout the views.

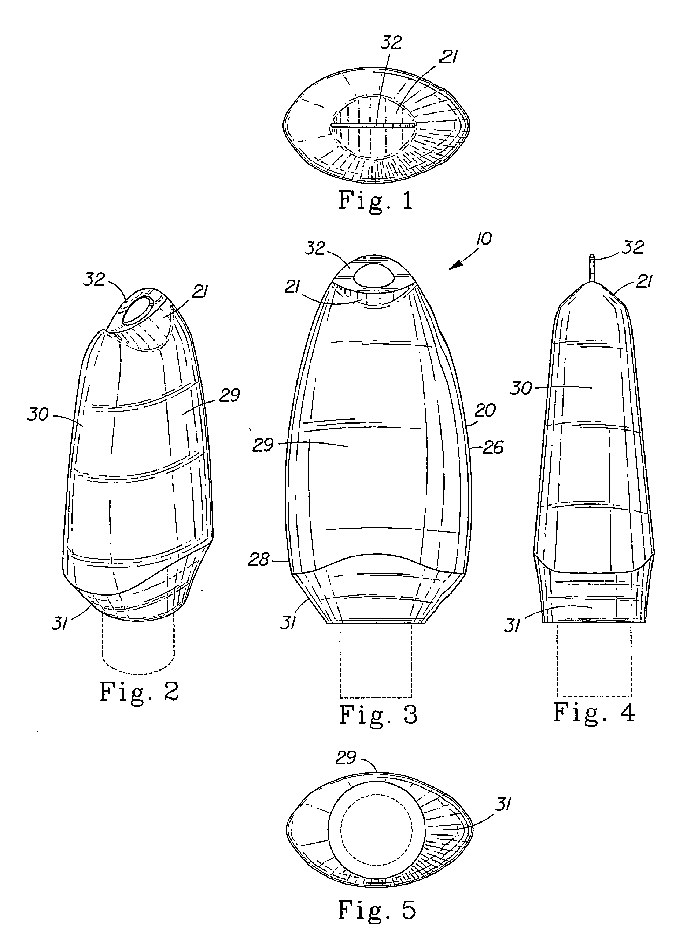

Referring to Figures 1-5, in a preferred embodiment of the present invention, the present invention provides a packaging system, indicated generally as 10. Body 20 of the present invention is preferably a one-piece integral container that is configured to contain a composition. As used herein, the term "integral" is defined as molded, or otherwise formed, as a single unitary product. In a further embodiment of the present invention, alternative molding process may be used, such as a two shot molding process and any other conventional process may be used.

Packaging system 10 includes a body 20. Body 20 further includes a middle portion 26 connecting upper portion 28 and closed bottom end 21. Upper portion 28, bottom end 21, and middle portion 26 collectively define a hollow interior of body 20 which contains a composition. The body 20 has opposed walls 29 and side walls 30 extending downwardly from the closed bottom end 21. Upper portion 28, in an embodiment, further comprises a shoulder 31 which is a transition section connection the upper portion 28 to the side walls 30. The closed bottom end 21, in an embodiment, further comprises a punch out opening 32. In a further embodiment of the present invention, Figure 4 further comprises a closure which may be any threaded or snap on conventional closure such as a continuous thread screw cap, a flip top, a disc top, a toggle top, and any other known conventional closure.

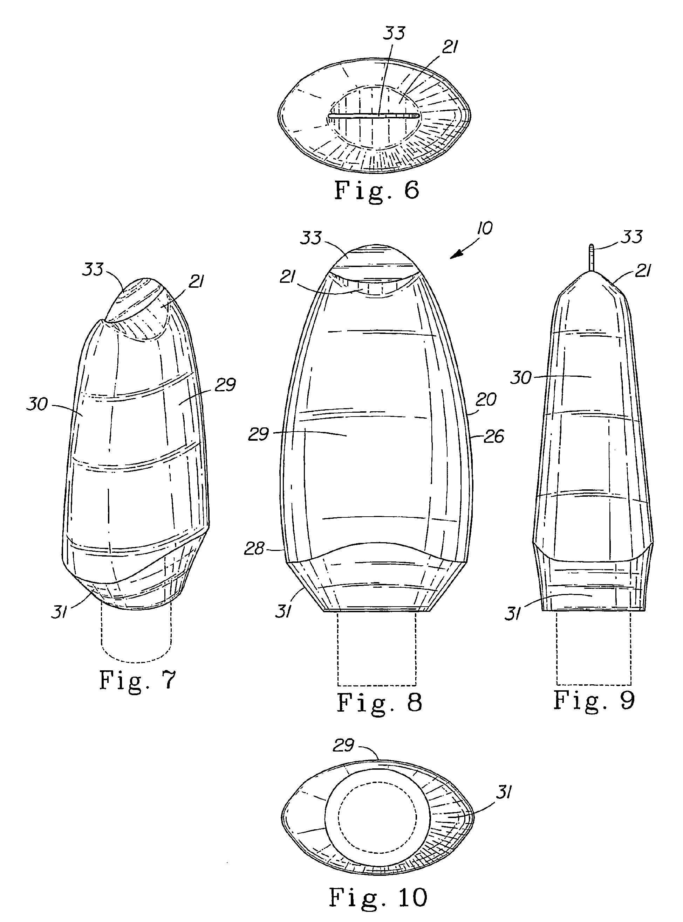

Referring to Figures 6-10, in a further embodiment of the present invention, the closed bottom end 21 further comprises a solid member 33.

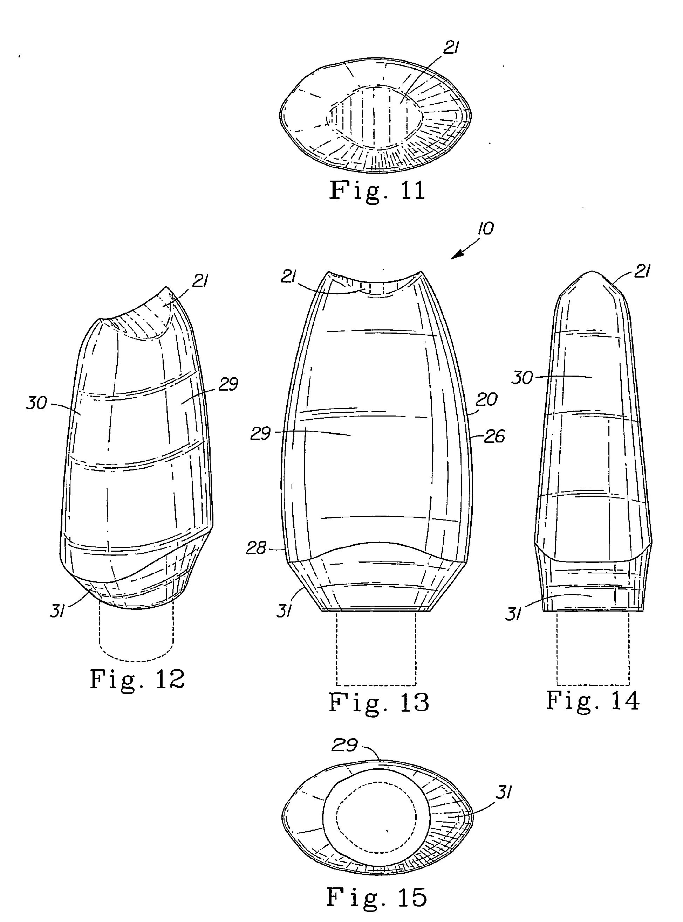

Referring to Figures 11-15, in a further embodiment of the present invention, the closed bottom end 21 is absent of either a punch out opening 32 or a solid member 33.

### Physical Blending of Resins

In a preferred embodiment of the present invention, the packaging of a composition, preferably a shear thinning liquids, in an extrusion blow molded thermoplastic package, as shown in Figures 1 - 15, comprises a combination of both High Density Polyethylene (HDPE) and Low Density Polyethylene (LDPE) thermoplastic resin types physically blended together at specific targeted ratios ranging from about 80% HDPE / 20% LDPE to about 20% HDPE / 80% LDPE, and in a further embodiment, ranging from about 50% HPDE / 50% LDPE ratio. Such a resin blend produces a package which is soft, squeezable, flexible, yet also maintains / recovers to its original size / shape after usage.

The HDPE resins of the present invention are conventionally known resins which would be appropriate for use in extrusion blow molding applications. Likewise, the LDPE resins of the present invention are conventionally known resins which would be appropriate for use in extrusion blow molding applications. In a preferred embodiment of the present invention, the HDPE has a density of about 0.950 g/ml +/- 0.020 g/ml, and the LDPE has a density of about 0.900 g/ml +/- 0.020 g/ml.

Non-limiting exemplary embodiments of the present invention comprise, for example, HDPE Fortiflex® HDPE B54-25H-127. Fortiflex® B54-25H-127 is a high density polyethylene copolymer developed for blow molding. It is recommended for use in applications which require a combination of high top load strength and good environmental stress crack resistance (ESCR).

Non-limiting exemplary embodiments of the present invention comprise, for example, Dow Polyethylene 1321 from Dow, which is an LDPE. Dow Polyethylene 1321 is a barefoot resin for heavy duty film applications, used in shrink film, shipping sacks, construction film and other gauge film applications.

As a further embodiment of the present invention, materials which may be used in the manufacturing process of the extrusion blow molded thermoplastic package including, but are not limited to the following: high density polyethylene (HDPE), middle density polyethylene (MDPE), low density polyethylene (LDPE), linear low density polyethylene (LLDPE), polypropylenes or tactile resins and mixtures thereof. Typical or known techniques for the physical blending of such materials is used. Further, such materials may be pre-blended prior to manufacture or blended at the time of manufacture. Nonlimiting examples of materials which may be used in the manufacturing process of the extrusion blow molded thermoplastic package are disclosed in Plastics Engineering Handbook of the Society of the Plastics Industry, Fifth Edition, 1991, which is incorporated by reference herein in its entirety.

### Material with Increased Elastomaric Properties

In a nonlimiting embodiment, the present invention is comprised of the blending of two resin types, namely HDPE and LDPE, which results in a material having physical properties similar to both HDPE and LDPE. The material is characterized as a semi-crystalline thermoplastic polymer.

Without being bound by theory, high temperature materials are divided into two main categories - semi-crystalline and amorphous - based on their difference in molecular structure. Semi-crystalline materials have a highly ordered molecular structure with sharp melt points. They do not gradually soften with a temperature increase, but rather, remain hard until a given quantity of heat is absorbed and then rapidly change into a low viscosity liquid. Such materials are anistropic in flow, shrinking less in the direction of flow versus transverse flow. They have excellent chemical resistance. Semi-crystalline exhibit substantial improvement in their Heat Deformation Temperature (HDTs) when reinforced and retain useful levels of strength and stiffness well beyond their glass transition temperature (Tg). Non-limiting examples of semi-crystalline materials include nylon, acetal, polyethylene, polypropylene and plolyester.

Amorphous high temperature resins have a randomly ordered molecular structure which does not have a sharp melt point but instead softens gradually as the temperature rises. These materials change viscosity when heated, but seldom are as easy flowing as semi-crystalline materials. They are isotropic in flow, shrinking uniformly in the direction of flow and transverse to flow. As a result, amorphous materials typically exhibit lower mold shrinkage and less tendency to warp than the semi-crystalline materials. Amorphous resins lose their strength quickly above their glass transition temperature (Tg). Non-limiting examples of an amorphous high temperature resin include ABS, polystyrene, polycarbonate, acrylic, SAN and PVC.

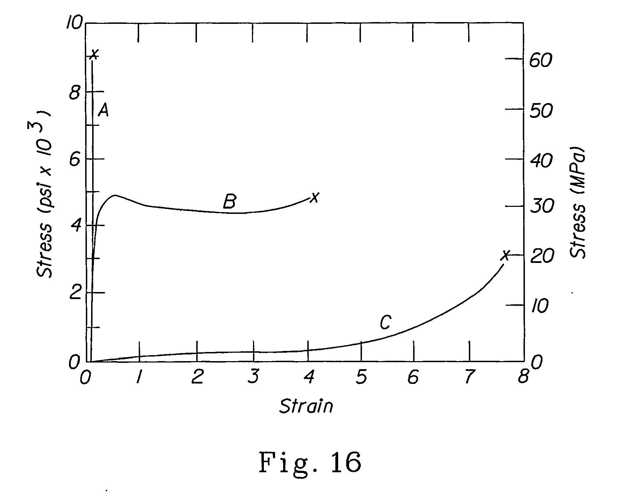

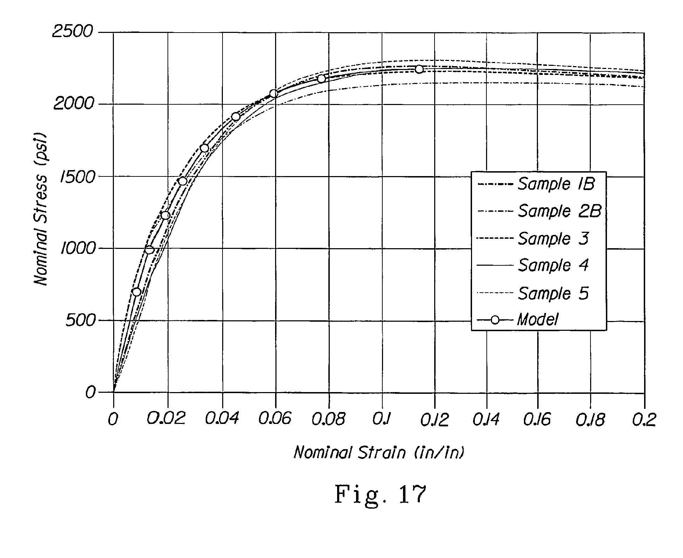

A stress / strain curve for a typical semi-crystalline thermoplastic polymer is as described in Figure 16 (strain being measured as in / in) and a stress / strain curve for the present invention is demonstrated in Figure 17.

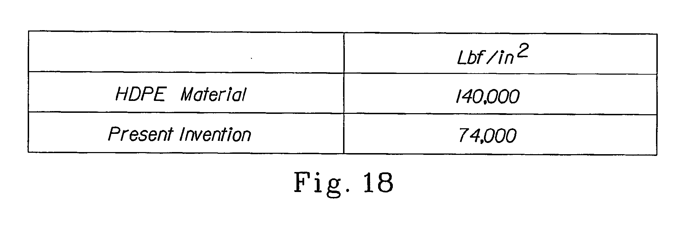

As demonstrated in Figure 17, the HDPE / LDPE blend of the present invention results in a stress / strain curve exhibiting:
1) An increase in the elastic limit versus a typical polyethylene curve (shown by decrease in the slope angle). This indicates the material comprised of the HDPE / LDPE blend has a greater elongation at its yield point and can withstand greater strain and still recover to its original dimensions with no permanent deformation. Therefore, the present invention may demonstrate more elongation with less force indicating an increase in elasticity and flexibility, which may result in the present invention being easier to squeeze.
2) Decrease in the modulus of elasticity (stiffness or resistance to deformation) versus a typical HDPE. As a result the present invention is easier (less force required) to squeeze than typical HDPE materials, as shown in Figure 18.

### Reduced Package Gram Weight

A light weight process used for the present invention may contribute to the increased flexibility / squeezability of the packaged product, yet must be accomplished so as to allow the packaged product to maintain enough rigidity to recover to original shape after usage.

The packaging of a composition, and in an embodiment, a shear thinning liquid, in an extrusion blow molded thermoplastic package as described above with the packaged product of the present invention, may be manufactured with a targeted reduced package gram weight versus a typical extrusion blow molded thermoplastic containers of the same size and volume. The present invention may comprise a reduced package gram weight in the range of from about 20% to about 40% reduction. The present invention may comprise a light weighting process which results in a thinner package wall and a proper distribution of a blended material, and in an embodiment, a blended HDPE / LDPE material. This light weight process of the present invention may contribute to the increased flexibility / squeezability, yet must be accomplished so as to allow the package to maintain enough rigidity to recover to original shape after usage. Typical HDPE packages with a volume of 50ml typically have gram weights of from about 7.5 grams to about 8.5 grams. The present invention comprises a target gram weight in the range of from about 4.0 grams to about 7.0 grams, +/- 1.0 grams, in accordance with a standard SPI (Supply Plastic Institute). A preferred embodiment of the present invention comprises a target gram weight of about 5.5 grams.

### Targeted Wall Thickness Profile

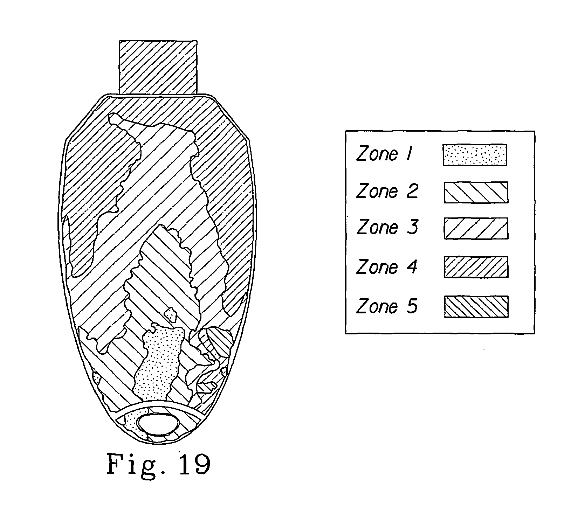

The present invention may comprise a packaging system wherein an extrusion blow molded thermoplastic package has a wall thickness profile as demonstrated in Figure 19. The concentration of a maximum wall thickness along the length of the extrusion blow molded thermoplastic package primary wall facilitates a spring back effect and increases package-in-use squeeze recovery capability. While not meant to be limiting, a package-in-use squeeze recovery capability is a standard consumer use process. A consumer may squeeze a package causing approximately about a ½ inch (0.0127 meters) to an inch (0.0254 meters) deflection in the package side walls as the product is dispensed. The package is expected to recover to its original shape during a typical usage time period, before the closure is reapplied to the package.

Thus, in the present invention, the perimeter width of the extrusion blow molded thermoplastic package ranges from 0.060 inches (0.0015 meters) to 0.010 inches (0.00025 meters). In a further embodiment of the present invention, the perimeter width of the extrusion blow molded thermoplastic package ranges from 0.042 inches (0.0011 meters) to 0.012 inches (0.0003 meters).

The thickness profile of the present invention may also comprise the shape of a thickness bands, as demonstrated in Figure 19. The thickness bands refers to the circular pattern(s) of the thickness profile around the center of the package and getting thinner towards the sides. As shown in Figure 19, a zone has been designated for the various thickness bands ranging from Zone 1 through Zone 5. The shape of the thickness bands progresses from bottom of the extrusion blow molded thermoplastic package to the top and from the center to the sides. In general, the thickness profile (i.e. circular pattern) may become thinner as you measure wall thickness and/or shape of bands from the bottom to the top and from the center to the sides, with the bottom and the center generally comprising the greater wall thickness profile.

### Stress Under Load Profile

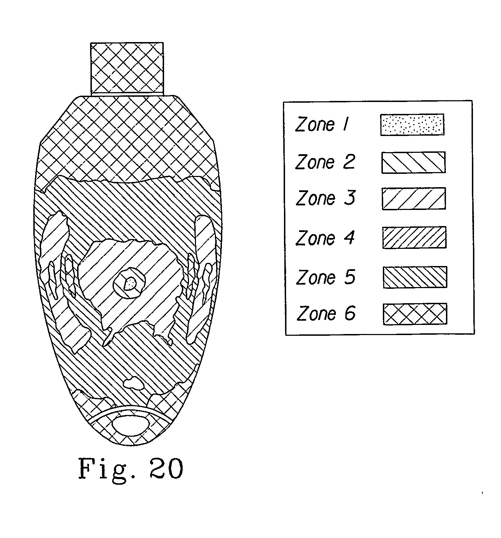

As demonstrated in Figure 20, an extrusion blow molded thermoplastic package of the present invention may comprise a stress distribution under load profile having areas of minimal stress surrounding or circling an area of primary stress or a deflection point. These circular low stress areas may assist in facilitating good squeeze / recovery properties. Such circular low stress areas are a result of the present invention's combination of a more elastic thermoplastic material and the package wall thickness profile. As shown in Figure 20, a zone has been designated for the various areas of stress ranging from Zone 1 through Zone 6.

The stress under load measurements of the present invention may range from about 3000 (20684 kPa) to about 500 PSI (3447 kPa). In a further embodiment of the present invention, the stress under load measurements may range from, about 2300 PSI (15858 kPa) to about 550 PSI (3792 kPa). In yet a further embodiment of the present invention, the stress under load measurements may range from about 2293 PSI (15810 kPa) to about 574 PSI (3958 kPa).

The dimensional characteristics and thickness of the extrusion blow molded package can vary according to several variables, including for example, the particular thermoplastic material selected, as well as, the size, shape and desired wall thickness of extrusion blow molded package.

A further embodiment of the present invention comprises selection of a specific shape of an extrusion blow molded thermoplastic package which may contribute to the efficacy profile of the present invention. A preferred embodiment of the present invention comprises a shape as demonstrated in Figures 1-5.

### Minimal Force to Squeeze

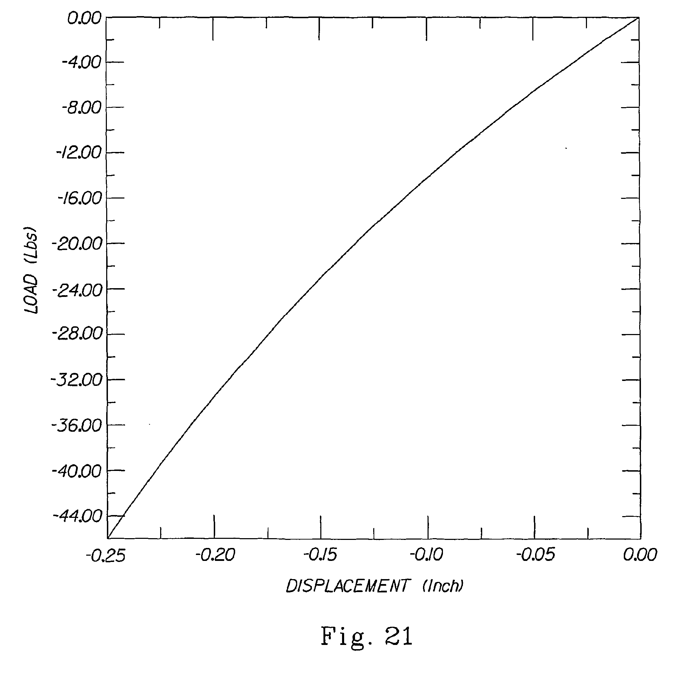

As demonstrated in Figure 21, the present invention comprises an extrusion blow molded thermoplastic package comprising a load versus displacement profile indicating a minimal amount of force is needed to squeeze in order to dispense from this packaged product. For the present invention, for an empty or non-filled extrusion blow molded thermoplastic package, there may be a 0.25 inch (0.0064 meters) displacement. In a typical or conventional extrusion blow molded thermoplastic package, it generally requires approximately .015 1bs (0.0068 kg) force to dispense from the package, when conducting a standard test method in the industry to measure the force required to deflect the package ¼ inch (0.0064 meters).

In an embodiment of the present invention, the minimal amount of force to squeeze wherein the displacement of a packaging system is about 0.25 inches (0.0064 meters), would require 0.044 lbs (0.0199 kg).

### Compositions

The present invention is directed to a packaged product comprising the combination of a composition with a packaging system comprising the composition, wherein the packaging system comprises an extrusion blow molded thermoplastic package comprising a combination of a high density polyethylene and a low density polyethylene thermoplastic resin in a ratio of from about 80% high density polyethylene thermoplastic resin / about 20% low density polyethylene thermoplastic resin to about 20% high density polyethylene thermoplastic resin / 80% low density polyethylene thermoplastic resin, wherein the packaged product is soft, squeezable, and flexible, and having the ability to recover to its original size/shape after usage.

Without being bound by theory, materials, such as plastic materials, initially resist deformation, until a yield stress is reached. When that stress is exceeded, the shear rate becomes measurable. Further stress leads finally to linear (Newtonian) behavior. Pseudoplastic materials exhibit shear thinning without the initial resistance to deformation. Like plastic materials, they also show linear (Newtonian) behavior at the highest levels of stress and shear rate. While not meant to be limiting, pseudoplastic is generally a non-newtonian fluid whose viscosity decreases as the applied shear rate increases, a process that may also be termed shear thinning. Further, while not meant to be limiting, Newtonian fluid is a fluid or dispersion whose rheological behavior is described by Newton's law of viscosity. Generally, in a Newtonian fluid, shear stress is proportional to shear rate, with the proportionality constant being the viscosity.

### a) Shear Thinning Compositions

The present invention comprises a composition in combination as part of a packaging system. In a preferred embodiment of the present invention, the composition may be a shear thinning liquid having a yield point high enough to require a squeeze package to facilitate sufficient liquid flow and subsequent dispensing of the liquid from the package.

In a non-limiting embodiment of the present invention, a shear thinning liquid is one which exhibits a decrease in viscosity with an increase in shear rate. Where the viscosity also changes as a function of time, the liquid is said to be time dependent. Thus, for a shear-thinning time dependent liquid, when shear is first initiated at a given shear rate, the shear stress will have a given value. While not meant to be limiting, shear may be the rate of deformation of a fluid when subjected to a mechanical shearing stress. Further, shear stress may be an applied force per unit are needed to produce deformation in a fluid. Further, yield stress may be, for some fluids, wherein the shear rate (flow) remains at zero until a threshold shear stress is reached, generally termed the yield stress. Beyond the yield stress, flow begins.

As the shear rate is maintained, the shear stress decreases with time to a lower value. Therefore, as the shear rate is maintained constant and shear stress is reduced, the viscosity of the fluid is likewise reduced over the time interval. If the shearing force is then removed from the liquid, the viscosity will not immediately increase to its former level but will recover more or less gradually with the passage of time. While not meant to be limiting, in general, viscosity may be a measure of the resistance of a liquid to flow.

A typical time-dependent liquid will recover its viscosity upon removal of the shearing force almost instantaneously, normally so fast that the recovery time cannot be measure with conventional laboratory material.

### b) Shear Thickening Composition

In a further embodiment of the present invention, the composition may be a shear thickening composition. While not meant to be limiting, in general, a shear thickening composition, or dilantant material, resist deformation more than in proportion to the applied force. For example, the more effort placed into stirring a dilatant material, the more resistant it becomes to stirring. This is generally an indication that the applied force is causing the material to adopt a more ordered structure.

### c) Newtonian Fluid

In a further embodiment of the present invention, the composition may be a Newtonian fluid. While not meant to be limiting, in general, a Newtonian Fluid is a fluid or dispersion whose rheological behavior is described by Newton's law of viscosity. For a typical Newtonian fluid, a shear stress is proportional to a shear rate, with the proportionality constant being the viscosity.

In an embodiment of the present invention, a composition of the present invention may have a rheology profile which is greater than or equal to about 2Pa @ 950s⁻¹. In a further embodiment of the present invention, a composition of the present invention may have a rheology profile which is greater than or equal to about 50Pa @ 950s⁻¹. In yet a further embodiment of the present invention, a composition of the present invention may have a rheology profile which is greater than or equal to about 100Pa @ 950s⁻¹.

The components, including those which may optionally be added, of the actives and compositions used in the present invention, as well as methods for preparation, and methods for use, are described in detail below.

The composition-of the present invention may include any of the following materials mentioned and described in below, either alone or in combination.

### Optional Components

In addition to the components described above, the compositions of the present invention may further comprise one or more optional components known or otherwise effective for use in hair care or personal care products, provided that the optional components are physically and chemically compatible with the components described above, or do not otherwise unduly impair product stability, aesthetics or performance. Nonlimiting examples of such optional components are disclosed in International Cosmetic Ingredient Dictionary, Fifth Edition, 1993, and CTFA Cosmetic Ingredient Handbook, Second Edition, 1992, both of which are incorporated by reference herein in their entirety.

The compositions of the invention can contain adjuvants that are common in the cosmetics field, such as emulsifiers; surfactants; conditioning actives (moisturizers; emollients); sunscreens; anti-free-radical agents; sequestering agents; antioxidants; preserving agents; acidifying or basifying agents; fragrances; dyestuffs; modified or non-modified, non-volatile silicones; reducing agents. The amounts of these various adjuvants are those used conventionally in the fields considered.

The present invention may, in some embodiments, further comprise additional optional components known or otherwise effective for use in hair care or personal care products. The concentration of such optional ingredients generally ranges from zero to about 25%, more typically from about 0.05% to about 25%, even more typically from about 0.1% to about 15%, by weight of the composition. Such optional components should also be physically and chemically compatible with the essential components described herein, and should not otherwise unduly impair product stability, aesthetics or performance.

### Methods of Manufacture

The compositions of the present invention may be prepared by any known or otherwise effective technique, suitable for providing a composition provided that the resulting composition provides benefits as described herein. Methods for preparing the embodiments of the present invention include conventional formulation and mixing techniques.

In a non-limiting embodiment of the present invention, an extrusion blow molded thermoplastic package of the present invention may be prepared by any known or otherwise effective technique, suitable for providing a package that provides the benefits described herein. Methods for preparing the embodiments of the present invention include conventional manufacture techniques.

The extrusion blow molded thermoplastic package of the present invention may be made using an extrusion blow-molding process, for example as described in U.S. Pat. No. 4,846,359, by Baird et al., hereby incorporated by reference herein. In such a process, molten thermoplastic material is extruded through an extrusion die head to form a parison. A mold closed around the parison such that is inches the parison's tail to form the container's bottom. The parison is then explanded by injecting pressurized air into the parison until it comes into contact with the mold's interior surface. After the formed container has cooled and solidified, the mold is opened and the finished container is removed.

In a further non-limiting embodiment of the present invention, the packaging system of the present invention may also be made by using an injection molding process, for example as described in U.S. Pat. No. 4,923,723 by Collette et al, U.S. Pat. No. 4,743,479 by Nakamura et al., and U.S. Pat. No. 4,525,134 by McHenry et al., hereby incorporated by reference herein. In such a process, typically a preform is injection molded, cooled, then subsequently reheated and blow-molded into the final container shape and size.

As a further embodiment of the present invention, materials which may be used in the manufacturing process of the extrusion blow molded thermoplastic package, but are not limited to: high density polyethylene (HDPE), middle density polyethylene (MDPE), low density polyethylene (LDPE), and linear low density polyethylene (LLDPE), polypropylenes or tactile resins and mixtures thereof. Typical or known techniques for the physical blending of such materials is used. Further, such materials may be pre-blended prior to manufacture or blended at the time of manufacture. The embodiments of the present invention may use the appropriate and suitable materials as needed.

As a further embodiment of the present invention, additional materials may be used in the manufacturing process of a thermoplastic package. Such materials may be, but are not limited to, vinyl derivatives of ethyl acetate (EVA) or any other additional conventional additives. Nonlimiting examples of materials which may be used in the manufacturing process of the extrusion blow molded thermoplastic pack gage are disclosed in Plastics Engineering Handbook of the Society of the Plastics Industry, Fifth Edition, 1991, which is incorporated by reference herein in its entirety.

Non-limiting exemplary embodiments of the extrusion blow molded thermoplastic package of the present invention may comprise a package that may be a mono-layer packaging system or a multi-layer packaging system. A preferred embodiment of the present invention comprises a mono-layer packaging system.

Non-limiting exemplary embodiments of the extrusion blow molded thermoplastic package of the present invention may comprise a package that may be from about 120 mm in length and from about 50 mm-in width and about 27 mm in front to back. In a preferred embodiment of the present invention, the extrusion blow molded thermoplastic package of the present invention may be from about 117 mm in length and about 45.6 mm in width and about 27 mm in front to back.

### Methods of Use

In a preferred embodiment, the present invention and the compositions of the present invention may be used in direct application to the skin or in a conventional manner for cleansing, treating or conditioning skin and hair. The compositions herein are useful for cleansing or conditioning the hair and scalp, and other areas of the body and for any other area of skin in need of treatment. The present invention may be used for treating, cleansing, or conditioning of the skin or hair of animals as well. An effective amount of the composition, typically from about 1g to about 50g, preferably from about 1g to about 20g of the composition, for cleansing and/or conditioning hair, skin or other area of the body, is topically applied to the hair, skin or other area that has preferably been wetted, generally with water, and then rinsed off. Application to the hair typically includes working the composition through the hair.

In a further embodiment, the present invention may be used in the general areas of fabric care products, home care products, health care products, and food products.

### EXAMPLES

The following examples further describe and demonstrate embodiments within the scope of the present invention. The examples are given solely for the purpose of illustration and are not to be construed as limitations of the present invention, as many variations thereof are possible without departing from the spirit and scope of the invention. All exemplified concentrations are weight percents, unless otherwise specified.

The compositions of the present invention may be formulations, as described and exemplified in U.S. Pat. No. 6,365,142, by Tamura, hereby incorporated by reference herein.

The compositions illustrated in the Examples of U.S. Pat. No. 6,365,142 illustrate specific embodiments of the present invention, but are not intended to be limiting thereof.

All exemplified compositions can be prepared by conventional formulation and mixing techniques. Component amounts are listed as weight percents and exclude minor materials such as diluents, filler, and so forth. The listed formulations, therefore, comprise the listed components and any minor materials associated with such components.

Having shown and described various embodiments of the present invention, further adaptations of the present invention as described herein can be accomplished by appropriate modifications by one of ordinary skill in the art without departing from the scope of the present invention. Several of these potential modifications and alternatives have been mentioned, and others will be apparent to those skilled in the art. For example, while exemplary embodiments of the inventive system have been discussed for illustrative purposes, it should be understood that the elements described may be constantly updated and improved by technological advances. Accordingly, the scope of the present invention should be considered in terms of the following claims and is understood not to be limited to the details of structure, operation or process steps as shown and described in the specification and drawings.

All documents cited in the Detailed Description of the Invention are, in relevant part, incorporated herein by reference; the citation of any document is not to be construed as an admission that it is prior art with respect to the present invention.

While particular embodiments of the present invention have been illustrated and described, it would be obvious to those skilled in the art that various other changes and modifications can be made without departing from the spirit and scope of the invention. It is, therefore, intended to cover in the appended claims all such changes and modifications that are within the scope of this invention.

## Claims

1. A packaged product comprising the combination of a composition with a packaging system comprising the composition, wherein the packaging system comprises an extrusion blow molded thermoplastic package comprising a combination of a high density polyethylene thermoplastic resin and a low density polyethylene thermoplastic resin in a ratio of from 80% high density polyethylene thermoplastic resin / 20% low density polyethylene thermoplastic resin to 20% high density polyethylene thermoplastic resin / 80% low density polyethylene thermoplastic resin, and the packaging system comprises a wall thickness in the range of from 0.00025 meters to 0.0015 meters, preferably in the range of from 0.0003 meters to 0.0011 meters.

2. A packaged product according to Claim 1 wherein the ratio of high density polyethylene thermoplastic resin to low density polyethylene thermoplatic resin comprises from 50% high density polyethylene thermoplastic resin to 50% low density polyethylene thermoplastic resin.

3. The use of a packaged product according to Claim 1 in a hair conditioner produt.

4. The use of a packaged product according to Claim 1 in a hair shampoo product.

## Patentansprüche

1. Verpacktes Produkt, umfassend die Kombination einer Zusammensetzung mit einem Verpackungssystem, welches die Zusammensetzung umfasst, wobei das Verpackungssystem eine extrusionsgeblasene, geformte thermoplastische Verpackung umfasst, die eine Kombination aus einem thermoplastischen Polyethylenharz hoher Dichte und einem thermoplastischen Polyethylenharz niedriger Dichte in einem Verhältnis von 80 % thermoplastischem Polyethylenharz hoher Dichte zu 20 % thermoplastischem Polyethylenharz niedriger Dichte bis 20 % thermoplastischem Polyethylenharz hoher Dichte zu 80 % thermoplastischem Polyethylenharz niedriger Dichte umfasst, und wobei das Verpackungssystem eine Wanddicke im Bereich von 0,00025 Meter bis 0,0015 Meter, vorzugsweise im Bereich von 0,0003 Meter bis 0,0011 Meter umfasst.

2. Verpacktes Produkt nach Anspruch 1, wobei das Verhältnis von thermoplastischem Polyethylenharz hoher Dichte zu thermoplastischem Polyethylenharz niedriger Dichte 50 % thermoplastisches Polyethylenharz hoher Dichte zu 50 % thermoplastischem Polyethylenharz niedriger Dichte umfasst.

3. Verwendung eines verpackten Produkts nach Anspruch 1 in einem Haar-Conditioniererprodukt.

4. Verwendung eines verpackten Produkts nach Anspruch 1 in einem Haar-Shampooprodukt.

## Revendications

1. Produit conditionné comprenant la combinaison d'une composition avec un système de conditionnement comprenant la composition, dans lequel le système de conditionnement comprend un conditionnement thermoplastique moulé par soufflage en extrusion comprenant une combinaison d'une résine thermoplastique de polyéthylène à haute densité et d'une résine thermoplastique de polyéthylène à basse densité dans un rapport allant de 80 % de résine thermoplastique de polyéthylène à haute densité / 20 % de résine thermoplastique de polyéthylène à basse densité à 20 % de résine thermoplastique de polyéthylène à haute densité / 80 % de résine thermoplastique de polyéthylène à basse densité, et le système de conditionnement comprend une épaisseur de paroi dans l'intervalle allant de 0,00025 mètre à 0,0015 mètre, de préférence dans l'intervalle allant de 0,0003 mètre à 0,0011 mètre.

2. Produit conditionné selon la revendication 1, dans lequel le rapport de résine thermoplastique de polyéthylène à haute densité sur résine thermoplastique de polyéthylène à basse densité comprend de 50 % de résine thermoplastique de polyéthylène à haute densité à 50 % de résine thermoplastique de polyéthylène à basse densité.

3. Utilisation d'un produit conditionné selon la revendication 1 dans un produit de type conditionneur pour les cheveux.

4. Utilisation d'un produit conditionné selon la revendication 1 dans un produit de type shampooing pour les cheveux.
